## Europäisches Patentamt

## European Patent Office

## Office européen des brevets

(11) Veröffentlichungsnummer: **0 143 365**
**B1**

(12) **EUROPÄISCHE PATENTSCHRIFT**

(45) Veröffentlichungstag der Patentschrift:
**10.05.89**

(21) Anmeldenummer: **84113315.0**

(22) Anmeldetag: **06.11.84**

(51) Int. Cl.⁴: **F 16 H 47/04,** F 16 H 37/08

(54) Lastschaltgetriebe mit stufenlos einstellbarer Übersetzung.

(30) Priorität: **22.11.83 DE 3342047**

(43) Veröffentlichungstag der Anmeldung:
**05.06.85 Patentblatt 85/23**

(45) Bekanntmachung des Hinweises auf die Patenterteilung:
**10.05.89 Patentblatt 89/19**

(84) Benannte Vertragsstaaten:
**FR GB IT NL SE**

(56) Entgegenhaltungen:
**EP-A-0 003 397**
**DE-A-1 500 481**
**FR-A-2 229 896**
**FR-A-2 274 837**
**FR-A-2 424 826**
**US-A-3 580 107**
**US-A-3 596 535**
**US-A-3 709 061**

**SAE-Schrift 720724, Sept. 1972, S.5**

(73) Patentinhaber: **Jarchow, Friedrich, Prof. Dr.- Ing.,
Am Ruhrstein 37, D-4300 Essen 1 (DE)**

(72) Erfinder: **Jarchow, Friedrich, Prof. Dr.- Ing., Am
Ruhrstein 37, D-4300 Essen 1 (DE)**
Erfinder: **Tenberge, Peter, Dipl.- Ing., Waldring 63,
D-4630 Bochum 1 (DE)**

(74) Vertreter: **Arendt, Helmut, Dipl.- Ing.,
Hubertusstrasse 2, D-3000 Hannover 1 (DE)**

**Beschreibung**

Die Erfindung betrifft ein Lastschaltgetriebe der im Oberbegriff von Patentanspruch 1 bzw. 2 angegebenen Art.

Die DE-PS-2 423 626 beschreibt derartige Getriebe. Die Lastschaltgetriebe nach den Figuren 1, 2, 7 und 16 haben Schaltgetriebe, die von den beiden Koppelwellen alternativ angetrieben werden und in denen vier Vorwärtsgänge schaltbar sind. Die langsame der beiden koaxialen Koppelwellen liegt hier innen. Das Schaltgetriebe besteht aus einem dreiwelligen umlaufgetriebe mit einer Sonnenradwelle, einer ersten Hohlradwelle und einer Stegwelle mit einem ersten Satz Planetenräder. Zur Schaltung von zwei Rückwärtsgängen ist ein zweiter Satz Planetenräder auf der Stegwelle vorgesehen, der mit dem ersten Satz Planetenräder und einem zweiten Hohlrad kämmt. Die Stegwelle ist drehfest mit der Hauptabtriebswelle verbunden. Die vier Vorwärtsgänge werden geschaltet, indem die beiden Koppelwellen alternativ entweder mit der Sonnenradwelle oder mit der Stegwelle verbunden werden und das erste Hohlrad gehäusefest gehalten wird. Die beiden Rückwärtsgänge schaltet man durch Gehäusefixierung der zweiten Hohlradwelle. Als Schaltkupplungen können hier Zahnkupplungen eingesetzt werden, wobei die Gangwechsel zwischen den vier Vorwärts- und den beiden Rückwärtsgängen bei Synchronlauf der Kupplungshälften ohne Zugkraftunterbrechung erfolgen. In den dreiwelligen Umlaufgetrieben des Schaltgetriebes werden nur die Umlaufübersetzungen von der Sonnenradwelle zur Stegwelle bei gehäusefestem Hohlrad ausgenutzt. In anderen Betriebszuständen werden die Umlaufgetriebe überbrückt.

In der SAE-Schrift Nr. 720 724 vom September 1972 "Characteristics of Multiple Range Hydromechanical Transmissions" ist auch ein derartiges Lastschaltgetriebe beschrieben. Hier liegt die schnelle der beiden koaxialen Koppelwellen innen. In diesem Getriebe sind zwei hydrostatische und drei hydromechanische Gänge schaltbar. Die hydrostatischen Gänge dienen zum stufenlosen Anfahren bei Vorwärts- und Rückwärtsfahrt aus dem Stillstand. Das dreiwellige Umlaufgetriebe des Schaltgetriebes wird hier ebenfalls nur mit seiner Umlaufübersetzung vom Sonnenrad zur Stegwelle bei gehäusefestem Kohlrad betrieben. Die Umlaufübersetzung von der Stegwelle zur Sonnenradwelle bei gehäusefestem Hohlrad und die Standübersetzung bei gehäusefestem Steg werden nicht ausgenutzt.

Der Erfindung liegt die Aufgabe zugrunde, in einem Schaltgetriebe für oben beschriebene Lastschaltgetriebe mit einem dreiwelligen Umlaufgetriebe mindestens fünf Vorwärts- und zwei Rückwärtsgänge zu schalten. Dabei sollen die Werte für Verlustleistung, Baugröße, Gewicht und Herstellaufwand kinematisch gleichwertiger Getriebe erreicht bzw. unterschritten werden.

Diese Aufgabe wird erfindungsmäßig durch die kennzeichnenden Teile von Anspruch 1 bzw. 2 gelöst. Anspruch und Anspruch 2 beziehen sich auf zwei Ausführungsformen des Koppelgetriebes des Lastschaltgetriebes, die sich besonders darin unterscheiden, daß einmal die schnelle Koppelwelle A die innere der beiden koaxialen Koppelwellen ist (Anspruch 1) und einmal die langsame Koppelwelle E (Anspruch 2). In bekannten Schaltgetrieben von Lastschaltgetrieben, mit denen maximal vier Vorwärtsgänge geschaltet werden, ist es ohne Bedeutung, welche der beiden koaxialen Koppelwellen innen liegen.

Die weiteren Vorteilsangaben gelten insbesondere für die Vorzugsauslegung, auf die Anspruch 1 zutrifft. Die Besonderheiten der anderen Auslegung werden an späterer Stelle genannt.

Das Koppelgetriebe stellt eine bestimmte Kinematik bezüglich der Hauptantriebswelle an und der beiden Koppelwellen A, E bereit. Dabei ist der innere Koppelgetriebeaufbau für die Funktion des Schaltgetriebes ohne Bedeutung. Das Schaltgetriebe besteht aus mehreren Schaltvorrichtungen, den Zahnrädern und Wellen eines dreiwelligen Umlaufgetriebes, der Hauptabtriebswelle ab und den beiden Koppelwellen A, E. Mit dem einen Umlaufgetriebe sind fünf Vorwärts- und zwei Rückwärtsgänge schaltbar. Daher benötigt man nur geringe Stellverhältnisse der Koppelwellen, um ein großes Gesamtstellverhältnis zu erreichen. Der maximale Stelleistungsanteil im Stellgetriebe des Koppelgetriebes wird dadurch sehr gering, was dem Wirkungsgrad zugute, kommt.

Das Umlaufgetriebe wird im 1. und 2. Gang an der Sonnenradwelle x angetrieben und die Stegwelle z ist mit der Hauptabtriebswelle ab verbunden. Im 3. und 4. Gang ist entweder die angetriebene Umlaufgetriebewelle gleichzeitig mit der Hauptabtriebswelle verbunden, oder das Umlaufgetriebe läuft als Kupplung um. Im 5. Gang treibt die langsame Koppelwelle E die Stegwelle z an und die Sonnenradwelle x ist mit der Hauptabtriebswelle ab gekoppelt. Solange keine direkte Wellenverbindung zwischen der antreibenden Koppelwelle und der Hauptabtriebswelle besteht, ist die Hohlradwelle y an das Gehäuse 0 gekoppelt. Sobald so eine direkte Wellenverbindung besteht, kann die Gehäusefixierung der Hohlradwelle y gelöst werden. Die beiden lastfreien Umlaufgetriebewellen, und zwar die Hohlradwelle y und die Stegwelle z oder die Sonnenradwelle x, können dann über Zahnkupplungen mit Synchronisierungen so geschaltet werden, daß die eigentlichen vier Gangwechsel ohne Zugkraftunterbrechung bei Synchronlauf der Kupplungshälften nur an zwei Stellen im Schaltgetriebe vorgenommen werden. In diesem Schaltgetriebe sind demnach Schaltungen ohne Zugkraftunterbrechung zum Gangwechsel und vorbereitende Schaltungen lastfreier Getriebeteile zu unterscheiden.

Während die Schaltungen zum Gangwechsel sehr schnell in den betreffenden Schaltzeitpunkten ablaufen müssen, dürfen die vorbereitenden Schaltungen längere Zeit in Anspruch nehmen, eben so lange, wie das Getriebe in diesem Gang betrieben wird.

Die beiden Rückwärtsgänge ähneln vom Schaltablauf dem 1. und 2. Vorwärtsgang. Das Umlaufgetriebe wird an der Sonnenradwelle angetrieben, die Hohlradwelle y ist mit der Hauptabtriebswelle ab verbunden und die Stegwelle z wird gehäusefest gehalten. Die Ankopplungen der Hohlradwelle y an die Hauptabtriebswelle ab und der Stegwelle z an das Gehäuse 0 erfolgen im Stillstand, so daß hierfür einfache Zahnkupplungen ohne Synchronisierungen eingesetzt werden.

Alle weiteren Ausführungen zu den Schaltvorgängen gelten für den Betriebszustand der Beschleunigung der Hauptabtriebswelle ab gegenüber der Hauptantriebswelle an. Im Betriebszustand der Verzögerung ist die Schaltlogik entsprechend umzukehren.

An der Stellbereichsgrenze, an der die Koppelwellen A und E gleiche Drehzahlen aufweisen, ist ein Gangwechsel gleichbedeutend mit dem Wechsel der Antriebswelle des Schaltgetriebes von Koppelwelle die an die Sonnenradwelle x angeschlossen ist, zu Koppelwelle A, die an die Sonnenradwelle x angeschlossen werden soll.

An der anderen Stellbereichsgrenze, an der die Koppelwelle A in bezug auf die Hauptantriebswelle an am schnellsten und die Koppelwelle E am langsamsten dreht, ist ein Gangwechsel gleichbedeutend mit dem Wechsel der Antriebswelle des Schaltgetriebes von Koppelwelle A, die an die Sonnenradwelle x angeschlossen ist, zu Koppelwelle E, die nun an die Stegwelle z angeschlossen werden soll. Damit ist klar, daß die Umlaufgetriebeübersetzung zwischen der Sonnenradwelle x und der Stegwelle z bei gehäusefester Hohlradwelle y gleich dem extremen Verhältnis der Drehzahlen der Koppelwellen A und E ist, womit auch die Standübersetzung dieses Umlaufgetriebes festliegt.

Mit nur zwei besonders ausgestalteten Schalteinrichtungen zum Schalten ohne Zugkraftunterbrechung bei Synchronlauf der Kupplungshälften werden in diesem Lastschaltgetriebe mit nur einem Umlaufgetriebe im Schaltgetriebe insgesamt 7 Gänge geschaltet. Das dabei erreichte Gesamtstellverhältnis ist gleich dem Stellverhältnis einer Koppelwelle zur fünften Potenz, wobei beide Koppelwellen das gleiche Stellverhältnis zur Hauptantriebswelle haben. Die geringe Anzahl der Zahneingriffe weist auf den hohen Wirkungsgrad dieses neuen Schaltgetriebes hin, zumal auch in den 5 Vorwärtsgängen nur ein Teil der Leistung als Gleitwälzleistung (1., 2., 5. Gang) oder sogar die gesamte Leistung als Kupplungsleistung übertragen wird (3., 4. Gang).

Mit den vorhandenen Schaltkupplungen kann ein Betriebszustand geschaltet werden, der ein stufenloses Beschleunigen der Hauptabtriebswelle ab aus dem Stillstand heraus bei drehender Hauptantriebswelle an ermöglicht. Dabei ist die schnelle Koppelwelle A mit der Sonnenradwelle x, die langsame Koppelwelle E mit der Stegwelle z und die Hohlradwelle y mit der Hauptabtriebswelle ab verbunden. Durch diese Schaltung wird im Grunde das Koppelgetriebe des Lastschaltgetriebes um das Umlaufgetriebe des Schaltgetriebes erweitert. In Betriebszuständen, die ein häufiges Anfahren erfordern, wird durch diese Schaltung die Reibungskupplung zwischen Antriebsmaschine und Lastschaltgetriebe geschont. Es ist hierbei eine besondere Regelung von Antriebsmaschine und Lastschaltgetriebe nötig, die das Lastschaltgetriebe vor Überlastung schützt.

In den Beschreibungen zu den Figuren 1 bis 12 sind Ausführungsbeispiele von Lastschaltgetrieben mit Angabe der Zähnezahlen der einzelnen Räder nach der Erfindung näher erläutert.

Fig. 1    zeigt ein Lastschaltgetriebe mit stufenlosem hydrostatischen Stellgetriebe im Koppelgetriebe.

Fig. 2    zeigt den Verlauf der Gesamtübersetzung des Lastschaltgetriebes nach Fig. 1 aufgetragen über der Stellübersetzung.

Fig. 3    zeigt auf die Antriebsdrehzahl bezogene Drehzahlverläufe im Lastschaltgetriebe nach Fig. 1.

Fig. 4    verdeutlicht die Schaltlogik des Lastschaltgetriebes nach Fig. 1.

Fig. 5    zeigt ein Lastschaltgetriebe mit stufenlosem mechanischen Stellgetriebe im Koppelgetriebe.

Fig. 6    zeigt den Verlauf der Gesamtübersetzung des Lastschaltgetriebes nach Fig. 5 aufgetragen über der Stellübersetzung.

Fig. 7    zeigt auf die Antriebsdrehzahl bezogene Drehzahlverläufe im Lastschaltgetriebe nach Fig. 5.

Fig. 8    verdeutlicht die Schaltlogik des Lastschaltgetriebes nach Fig. 5.

Fig. 9    zeigt den Aufbau eines Schaltgetriebes eines Lastschaltgetriebes mit der langsamen Koppelwelle E als innerer der beiden koaxialen Koppelwellen.

Fig. 10   verdeutlicht die Schaltlogik des Schaltgetriebes nach Fig. 9.

Fig. 11   zeigt den Aufbau eines um ein Umlaufgetriebe erweiterten Schaltgetriebes eines Lastschaltgetriebes mit 7 Vorwärts- und 4 Rückwärtsgängen.

Fig. 12   verdeutlicht die Schaltlogik des Schaltgetriebes nach Fig. 11.

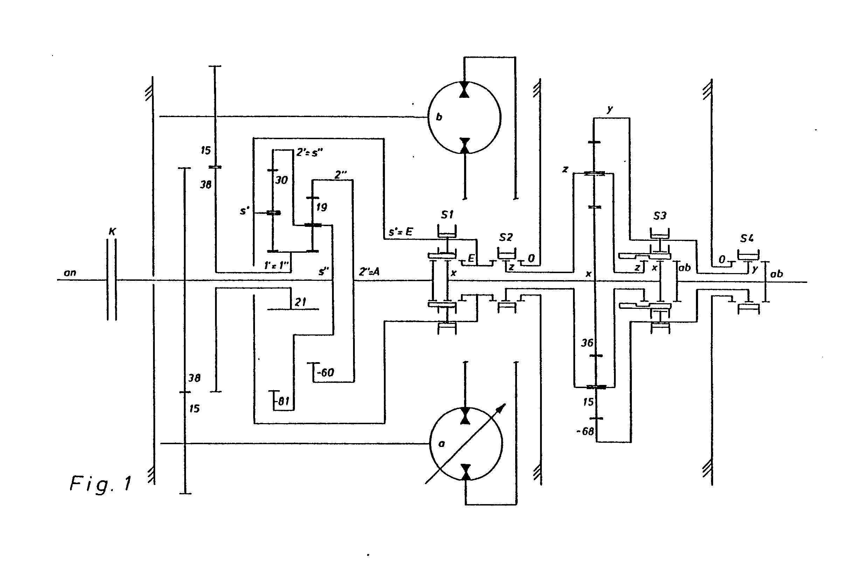

Das Koppelgetriebe des Lastschaltgetriebes nach Fig. 1 besitzt ein vierwelliges Umlaufgetriebe, das aus zwei dreiwelligen Umlaufgetrieben zusammengesetzt ist. Die Hauptantriebswelle an ist gleichzeitig die Stegwelle s'' des einen dreiwelligen Umlaufgetriebes und die Hohlradwelle 2' des anderen dreiwelligen Umlaufgetriebes. Die gemeinsame Sonnenradwelle 1', 1'' ist mit der Hauptantriebswelle an über zwei Vorgelege 15, 38 mit der Gesamtübersetzung 1 und ein stufenloses hydrostatisches Stellgetriebe a, b gekoppelt. Die Axialkolbenmaschine a ist in Schrägscheibenbauart ausgebildet und im Verdrängungsvolumen einstellbar. Die Axialkolbenmaschine b ist wegen ihres konstanten Verdrängungsvolumens in Schrägachsenbauart ausgeführt. Die Übersetzung des hydrostatischen Stellgetriebes ist in den Grenzen von -1 bis +1 stufenlos einstellbar. Die Hohlradwelle 2'' des einen dreiwelligen Umlaufgetriebes ist die schnelle Koppelwelle A, die Stegwelle s' des anderen dreiwelligen Umlaufgetriebes ist die langsame Koppelwelle E. Die beiden Koppelwellen A und E treiben alternativ das nachgeordnete Schaltgetriebe an, wobei die Koppelwelle E im 1., 3., 5. Gang und dem 1. Rückwärtsgang und die Koppelwelle A im 2., 4. Gang und dem 2. Rückwärtsgang an das Schaltgetriebe angeschlossen ist.

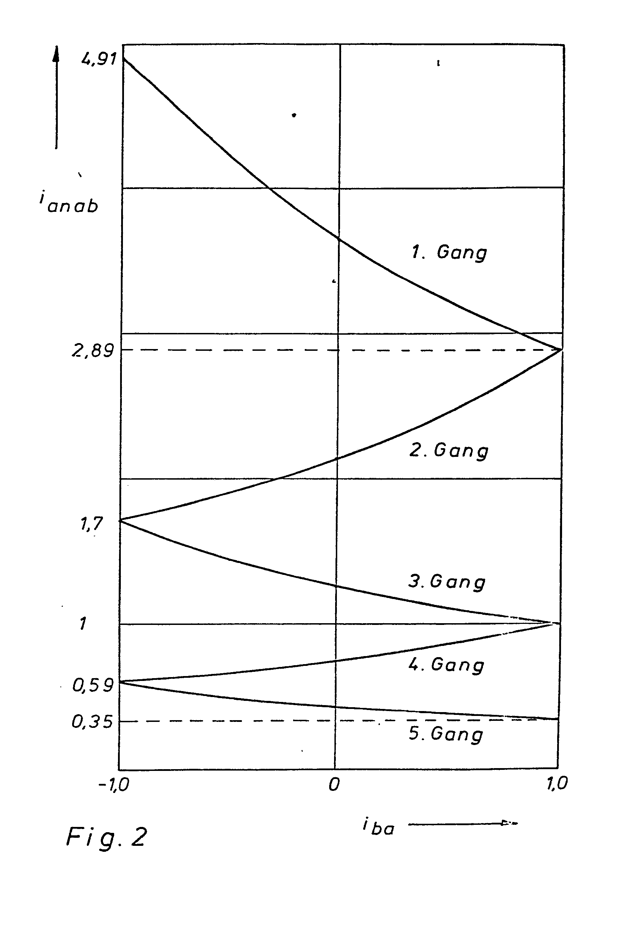

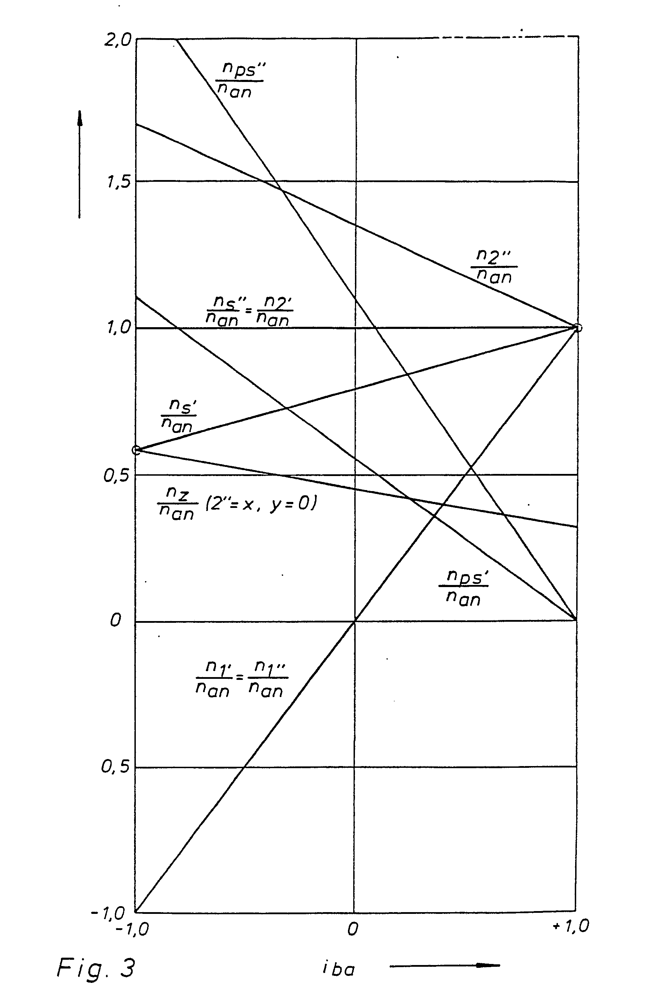

Fig. 2 zeigt den Verlauf der Gesamtübersetzung $i_{an\ ab}$ in den einzelnen Vorwärtsgängen, aufgetragen über der Stellübersetzung $i_{ab}$. Die größte Übersetzung im ersten Gang stellt sich an der Stellbereichsgrenze ein, an der die Koppelwelle E in bezug auf die Hauptantriebswelle am langsamsten dreht. Dies ist in einem Koppelgetriebe nach Fig. 1 bei der Stellübersetzung -1 der Fall. Fig. 3 zeigt die Verläufe der auf die Hauptantriebsdrehzahl bezogenen Drehzahlen n der Koppelwellen 2'' = A und s' = E, der Stegwelle z im Schaltgetriebe bei gehäusefester Hohlradwelle y und Antrieb der Sonnenradwelle x durch die schnelle Koppelwelle A, der gemeinsamen Sonnenradwelle 1' = 1'' sowie der Koppelgetriebeplaneten $p_s$ bezüglich ihrer Stege.

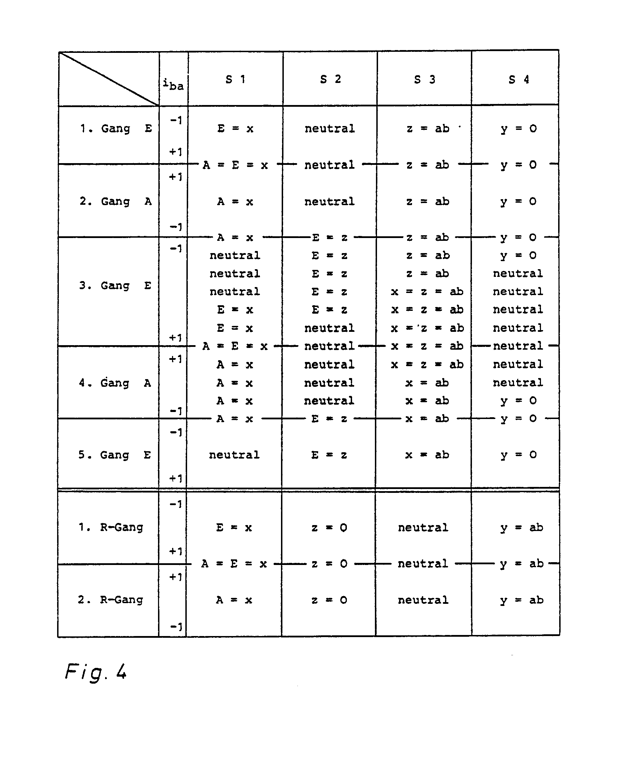

Fig. 4 verdeutlicht die Schaltlogik beim Regeln des Lastschaltgetriebes durch seinen Stellbereich. Im 1. Gang ist die langsame Koppelwelle E im Schaltblock S1 an die Sonnenradwelle x des dreiwelligen Umlaufgetriebes im Schaltgetriebe gekoppelt (S1: E = x). Die Hohlradwelle y ist im Schaltblock S4 gehäusefest gehalten (S4: y = 0). Im Schaltblock S3 ist die Stegwelle z mit der Hauptabtriebswelle ab gekoppelt (S3: z = ab). Im Schaltblock S2 sind alle Wellen frei (S2: neutral). Beim Durchregeln der Stellübersetzung zur Grenze 1 wird die Koppelwelle E schneller und die Koppelwelle A langsamer. Der Synchronlauf ist bei der Stellübersetzung 1 erreicht.

Im Schaltzeitpunkt selbst werden erst die Koppelwelle A und die Sonnenradwelle x gekoppelt, bevor diese von der Koppelwelle E getrennt wird (S1: A = E = x). Die Trennung erfolgt erst, wenn die Koppelwelle A die gesamte Last übernommen hat, das heißt, wenn innerhalb des Zahnspieles die Wellen x und E frei sind. Die Schaltstellungen in den anderen Schaltblöcken bleiben unverändert.

Im 2. Gang ist nur noch die schnelle Koppelwelle A im Schaltblock S1 mit der Sonnenradwelle x verbunden (S1: A = x). Die Schaltstellungen in den anderen Schaltblöcken sind gegenüber dem 1. Gang unverändert. Beim Durchregeln der Stellübersetzung zur Grenze -1 wird die Koppelwelle A schneller und die Koppelwelle E langsamer. Das Drehzahlverhältnis der Koppelwellen A und E an dieser Stellbereichsgrenze ist aufgrund der Getriebeauslegung identisch mit dem Drehzahlverhältnis der Sonnenradwelle x und der Stegwelle z bei gehäusefester Hohlradwelle y, so daß an dieser Stellbereichsgrenze der Synchronlauf der Wellen E und z vorliegt.

Beim Gangwechsel bestehen kurzzeitig die Wellenverbindungen (S1: A = x) und (S2: E = z), um den Kraftfluß nicht zu unterbrechen. Erst wenn die Welle E die Last voll übernommen hat und die Welle A innerhalb des Zahnspieles der Zahnkupplung lastfrei ist, werden die Wellen A und x im Schaltblock S1 getrennt, in dem nun alle Wellen frei sind (S1: neutral).

Im 3. Gang ist die langsame Koppelwelle E im Schaltblock S2 mit der Stegwelle z verbunden (S2: E = z), die im Schaltblock S3 mit der Hauptabtriebswelle ab gekoppelt ist (S3: z = ab). Die Verzahnungen des Umlaufgetriebes sind damit entlastet, da die Stegwelle z sowohl alleiniger Antrieb, als auch alleiniger Abtrieb ist. Im Schaltblock S4 wird nun die Fixierung der Kohlradwelle y an das Gehäuse gelöst (S4: neutral). Das sich selbst überlassene Umlaufgetriebe mit den freien Wellen x und y wird den Kupplungspunkt mit gleichen Drehzahlen aller drei Wellen x, y, z anstreben. Dieses Bestreben wird durch die mit bekannten Reibsynchronisierungen unterstützte Kopplung der Wellen x und z im Schaltblock S3 unterstützt (S3: x = z = ab). Da nun im Schaltblock S3 die Wellen x und z gekoppelt sind, können auch im Schaltblock S1 die Wellen E und x gekoppelt werden (S1: E = x). Hierfür ist keine Schalthilfe nötig, da beide Wellen synchron laufen, da beide Wellen an dieser Stelle in diesem Moment ohne Last sind und da für diesen Schaltvorgang erheblich mehr Zeit zur Verfügung steht als bei Schaltvorgängen zum Gangwechsel. Beim Durchregeln der Stellübersetzung zur Grenze 1 verändern sich die Drehzahlen der Koppelwellen E und A wie im 1. Gang.

Der Gangwechsel vom 3. in den 4. Gang entspricht vom Schaltablauf dem Gangwechsel vom 1. in den 2. Gang.

Im 4. Gang ist die Koppelwelle A im Schaltblock S1 wieder mit der Sonnenradwelle x verbunden (S1: A = x). Sonnenradwelle x und Stegwelle z sind mit der Hauptabtriebswelle ab im Schaltblock S3 gekoppelt (S3: x = z = ab). In den Schaltblöcken S2 und S4 sind alle Wellen frei (S2: neutral), (S4: neutral). Die Verzahnungen des Umlaufgetriebes x, y, z sind demnach immer noch lastfrei, da die Sonnenradwelle x sowohl alleiniger Antrieb, als auch alleiniger Abtrieb ist. Die Kopplung der Wellen z und x kann deshalb im Schaltblock S3 gelöst werden, wobei die Wellen x und ab verbunden bleiben (S3: x = ab). Das Umlaufgetriebe ist wieder sich selbst überlassen. Es wird im Kupplungszustand verharren wollen. Für den 5. Gang ist jedoch eine gehäusefeste Hohlradwelle y nötig, so daß mittels einer Reibsynchronisierung die lastfreie Hohlradwelle abgebremst und im Schaltblock S4 gehäusefest gehalten wird (S4: y = 0). Dadurch erhält man wieder die definierte Übersetzung zwischen den Wellen A und z, so daß im Betriebspunkt an der Stellbereichsgrenze -1 die Wellen E und z wieder synchron laufen.

Der Gangwechsel vom 4. in den 5. Gang entspricht vom Schaltablauf dem Gangwechsel vom 2. in den 3. Gang.

Im 5. Gang ist die langsame Koppelwelle E im Schaltblock S2 mit der Stegwelle z verbunden (S2: E = z). Die Hohlradwelle y ist im Schaltblock S4 ans Gehäuse fixiert (S4: y = 0). Die Sonnenradwelle x ist im Schaltblock S3 mit der Hauptabtriebswelle ab gekoppelt (S3: x = ab). Der Schaltblock S1 befindet sich in neutraler Stellung (S1: neutral). Die kleinste Übersetzung liegt vor, wenn die Koppelwelle E an der Stellbereichsgrenze 1 maximal gegenüber der Hauptantriebswelle an dreht.

Im 1. und 2. Rückwärtsgang entspricht die Ankopplung der Koppelwellen A und E an das Schaltgetriebe und das Schalten beim Gangwechsel dem Verfahren beim 1. und 2. Vorwärtsgang. Anders ist hierbei, daß die Hohlradwelle y im Schaltblock S4 mit der Hauptabtriebswelle ab verbunden ist (S4: y = ab), die Stegwelle z im Schaltblock S2 ans Gehäuse gekoppelt ist (S2: z = 0) und im Schaltblock S3 alle Wellen frei sind (S3: neutral).

Beim Verzögern der Hauptabtriebswelle ab gegenüber der Hauptantriebswelle an sind die entsprechenden Schaltungen in umgekehrter Reihenfolge auszuführen.

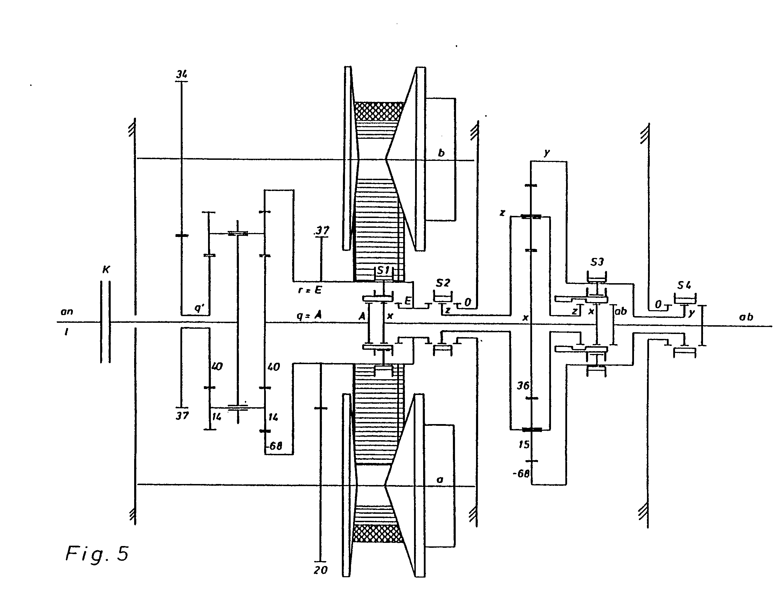

Das Koppelgetriebe des Lastschaltgetriebes nach Fig. 5 besitzt ein vierwelliges Umlaufgetriebe, das im Grunde nur ein dreiwelliges Umlaufgetriebe ist, dessen Sonnenradwelle q auf beiden Seiten der Stegwelle 1 vorhanden sein muß. Dazu wurde der Planetenradsatz verdoppelt, so daß die hinzukommenden Planeten mit der zweiten Sonnenradwelle q' in Eingriff stehen. Die Sonnenradwelle q' und die Hohlradwelle r sind über zwei Vorgelege und ein stufenloses mechanisches Stellgetriebe a, b gekoppelt. Dies ist ein Umschlingungsgetriebe, welches in der dargestellten Ausführung in seiner Übersetzung in den Grenzen von 1/1,7 bis 1,7 stufenlos einstellbar ist. Die Hohlradwelle r ist die langsame Koppelwelle E, die Sonnenradwelle q ist die schnelle Koppelwelle. Diese beiden Koppelwellen treiben alternativ in bereits beschriebener Weise das nachgeordnete Schaltgetriebe an.

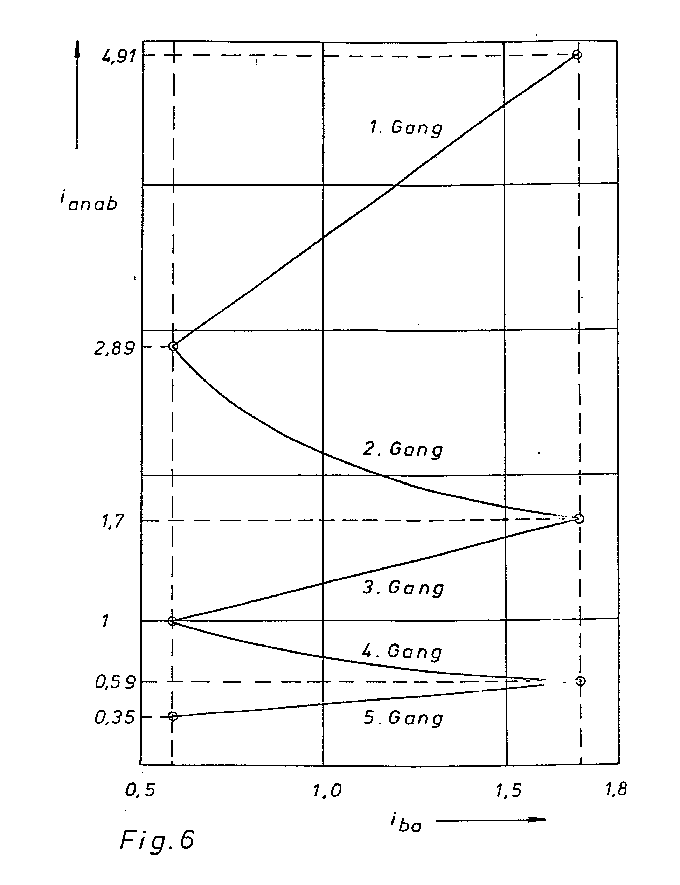

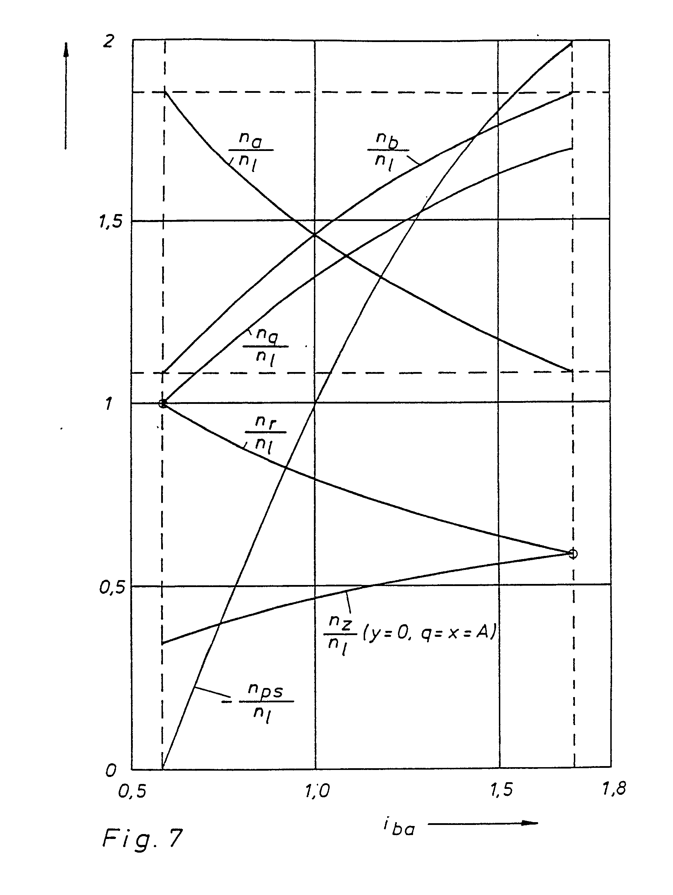

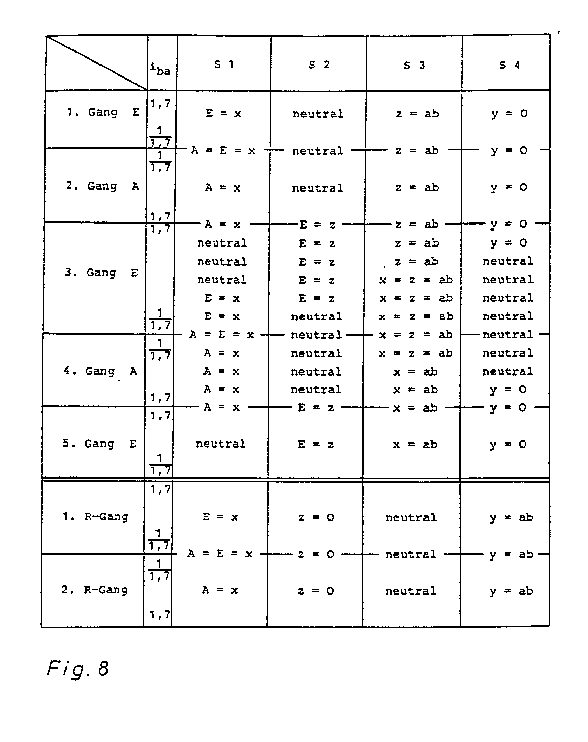

Die Figuren 6, 7 und 8 beziehen sich in entsprechender Weise auf Fig. 5 wie die Figuren 2, 3 und 4 auf Fig. 1. Hier wird nochmals deutlich, daß der innere Aufbau des Koppelgetriebes nur einen im Oberbegriff zu den Patentansprüchen 1 und 2 bezeichneten Einfluß auf die Funktion des Schaltgetriebes hat.

Das Schaltgetriebe übernimmt im 3. und 4. Gang eine Kupplungsfunktion, in den ersten beiden Gängen geht die Drehzahl ins Langsame und im 5. Gang ins Schnelle. Diese Kinematik eignet sich besonders für den Einsatz dieser Lastschaltgetriebe in Kraftfahrzeugen.

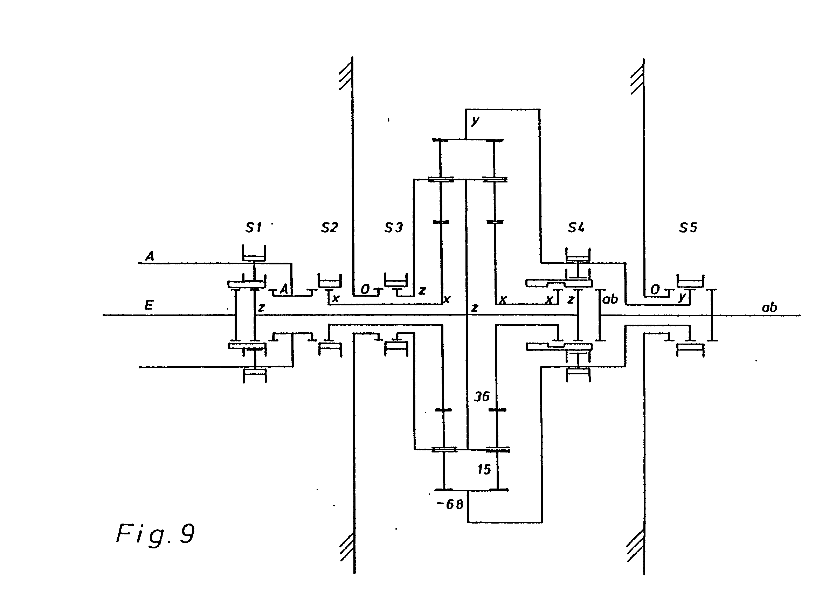

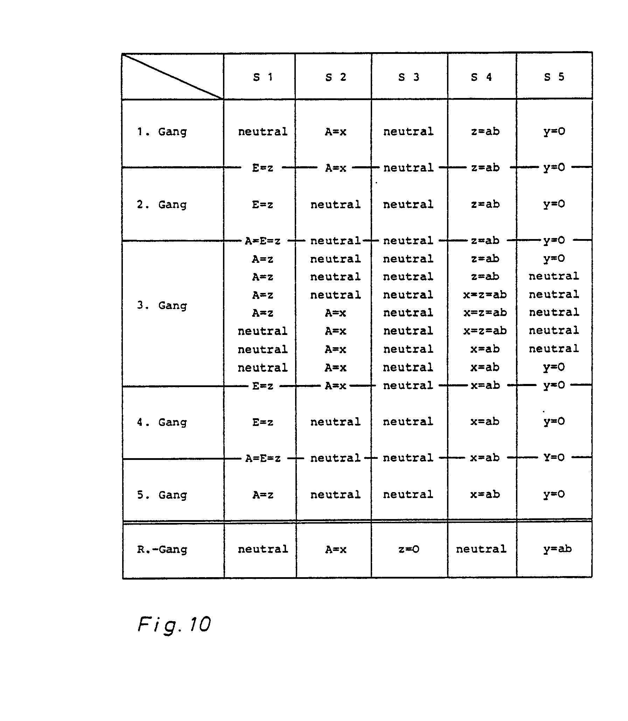

Es sind nun Koppelgetriebeauslegungen möglich, bei denen die langsame Koppelwelle E die innere der beiden koaxialen Koppelwellen A und E ist. Fig. 9 zeigt ein daran angepaßtes Schaltgetriebe und Fig. 10 die zugehörige Schaltlogik. Dieses Schaltgetriebe übernimmt im 2. und 3. Gang eine Kupplungsfunktion, nur im 1. Gang geht die Drehzahl ins Langsame und im 4. und 5. Gang ins Schnelle. Diese Kinematik eignet sich nicht mehr so gut für den Kraftfahrzeugeinsatz, könnte jedoch durch eine entsprechende Differentialübersetzung angepaßt werden. Mit diesem Getriebe ist nur ein Rückwärtsgang schaltbar, da bei gehäusefester Stegwelle (S3: z = 0) nur die Koppelwelle A mit der Sonnenradwelle x verbunden werden kann (S2: A = x). Der konstruktive Aufwand für das dreiwellige Umlaufgetriebe des Schaltgetriebes ist bei der Ausführungsvariante nach Fig. 9 größer als bei den Vorzugsvarianten nach den Figuren 1 und 5, da auch hier, wie bei der Koppelgetriebeauslegung nach Fig. 5, zwei Sonnenradwellen und ein doppelter Planetenradsatz nötig sind.

In den Schaltgetriebeauslegungen nach den Figuren 1 und 5 wäre ein 6. Gang möglich, wenn man die Koppelwelle A an die Stegwelle z anschließen könnte. Dies erforderte jedoch erheblichen konstruktiven Aufwand.

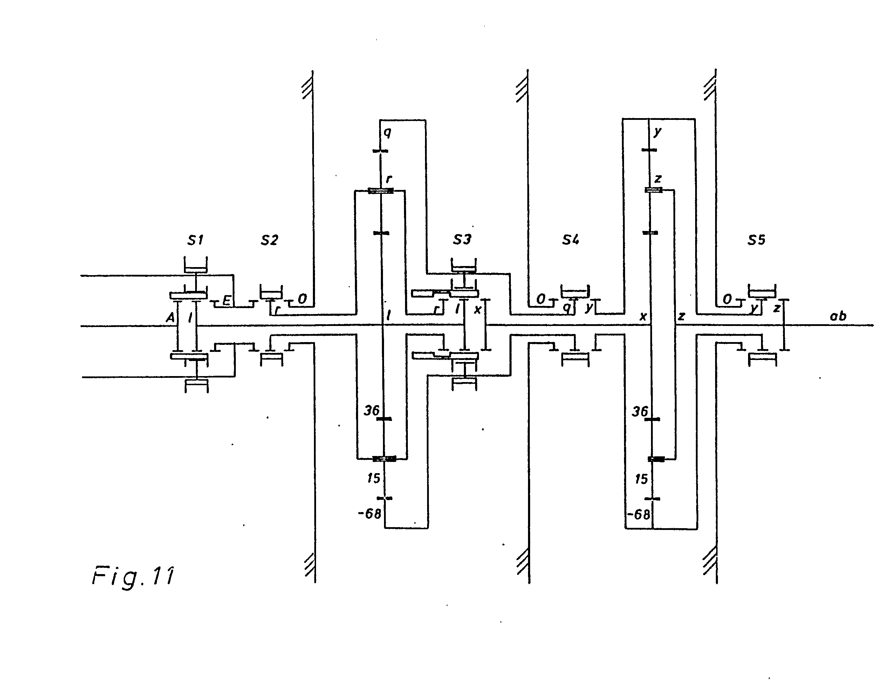

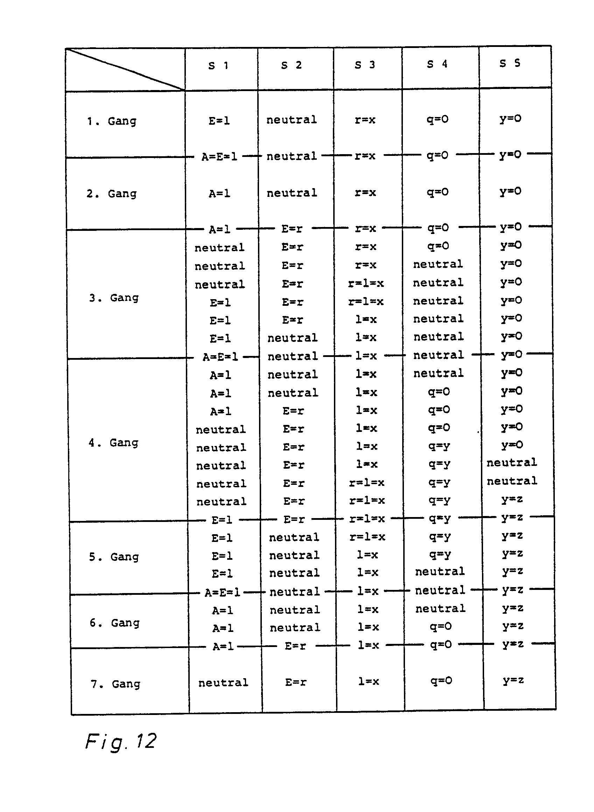

Durch weitere Umlaufgetriebe im Schaltgetriebe kann natürlich die Anzahl der Gänge erhöht werden. Fig. 11 zeigt so ein Schaltgetriebe, das an Stelle der Schaltgetriebe in den Figuren 1 und 5 eingesetzt werden könnte. Es hat 7 Vorwärts- und 4 Rückwärtsgänge. Zum Schalten dieser 11 Gänge sind nun 5 Schaltblöcke nötig und die beiden in der Verzahnungsgeometrie identischen Umlaufgetriebe mit den Wellen x, y, z bzw. l, r, q. Fig. 12 gibt die Schaltlogik für die 7 Vorwärtsgänge an. In den ersten 4 Gängen geht die Übersetzung ins Langsame, im 7. Gang ins Schnelle und im 5. und 6. Gang übernimmt das Schaltgetriebe Kupplungsfunktion. Nur in den beiden Schaltblöcken S1 und S2 sind in bereits beschriebener Weise Schaltungen zum Gangwechsel ohne Zugkraftunterbrechung bei geregeltem Synchronlauf der Kupplungshälften erforderlich. Alle anderen Schaltungen sind entweder vorbereitende Schaltungen zum Gangwechsel oder Schaltungen für Rückwärtsgänge.

Legt man Koppelgetriebe nach den Figuren 1 und 5 auf eine möglichst gleichmäßige Übersetzungsänderung zwischen den Koppelwellen und der Hauptantriebswelle bei Veränderung der Stellübersetzung aus, dann sind die Stellverhältnisse der beiden Koppelwellen A und E gleich. Damit sind die Verhältnisse ihrer maximalen und minimalen Übersetzungen zur Hauptantriebswelle gemeint. Je mehr Gänge ein Schaltgetriebe ermöglicht, um so kleiner braucht das Koppelstellverhältnis der Koppelwellen zu sein zur Erreichung eines bestimmten Gesamtstellverhältnisses. Das Koppelstellverhältnis bestimmt seinerseits die Standübersetzungen in den Umlaufgetrieben des Schaltgetriebes. In den Ausführungsvarianten nach den Figuren 1, 5 und 11 bedeutet eine Verkleinerung des Koppelstellverhältnisses eine Vergrößerung der negativen Standübersetzung.

Im allgemeinen erfolgt das Anfahren mit einer Reibungskupplung K.

Koppelt man in Lastschaltgetrieben nach den Figuren 1 und 5 im Schaltblock S1 die Wellen A und x (S1: A = x), im Schaltblock S2 die Wellen E und z (S2: E = z) und im Schaltblock S4 die Wellen y und ab (S4: y = ab), so erhält man damit ein Getriebe, dessen Hauptabtriebswelle ab bei drehender Hauptantriebswelle an an einer Stellbereichsgrenze des Stellgetriebes stillstehen kann und bei Veränderung der Stellübersetzung zur anderen Stellbereichsgrenze monoton schneller wird. Im Schaltblock S3 sind dabei alle Wellen frei (S3: neutral). An der Stellbereichsgrenze, an der die Hauptabtriebswelle drehen kann, läuft das gesamte Lastschaltgetriebe als Kupplung um, wie es sonst beim Übergang vom 3. in den 4. Gang der Fall ist. Während dieses gesamten Betriebszustandes besteht ein festes Verhältnis zwischen dem Hauptabtriebsdrehmoment und dem maximalen Drehmoment am Stellgetriebe. Da die Gesamtübersetzung sehr groß, theoretisch unendlich groß werden kann, muß eine besondere Regelung in diesem Betriebszustand das Hauptantriebsdrehmoment so gering halten, daß das Stelgetriebe nicht überlastet wird. Dieser Betriebszustand eignet sich deshalb weniger zum maximalen Beschleunigen der angeschlossenen Arbeitsmaschine, sondern vielmehr zum Anfahren mit wenig Last und dann besonders, wenn dadurch bei häufigem Anfahren die Reibungskupplung K zwischen Antriebsmaschine und Lastschaltgetriebe geschlossen bleiben kann und wenig verschleißt. Im Fahrzeugeinsatz tritt so ein Betriebszustand zum Beispiel beim Stop-and-Go-Betrieb bei dichter Verkehrslage auf.

## Patentansprüche

1. Lastschaltgetriebe, bestehend aus zwei Teilgetrieben, wobei das eine Teilgetriebe ein stufenlos einstellbares, leistungverzweigendes Koppelgetriebe ist, dessen eine Welle Hauptantriebswelle (an) ist und das zwei koaxiale Koppelwellen (A, E) besitzt, deren Übersetzungen zur Hauptantriebswelle (an) in der Weise stufenlos einstellbar sind, daß an einer Stellbereichsgrenze des stufenlosen Stellgetriebes des Koppelgetriebes beide Koppelwellen (A, E) gleiche Drehzahlen aufweisen, während beim Durchregeln der Stellübersetzung des Stellgetriebes zur anderen Stellbereichsgrenze eine der Koppelwellen (A) monoton schneller und die andere Koppelwelle (E) monoton langsamer wird, und wobei das andere Teilgetriebe ein Schaltgetriebe ist, das alternativ von einer der beiden Koppelwellen (A, E) angetrieben wird und das eine Hauptabtriebswelle (ab) besitzt, die in der Weise über verschiedene Übersetzungen mit der jeweils antreibenden Koppelwelle verbindbar ist, daß sich in einem weiten Bereich eine stufenlose Übersetzung zwischen der Hauptantriebswelle (an) und der Hauptabtriebswelle (ab) einstellen läßt und daß bei einem Gangwechsel die zu verbindenden Kupplungshälften synchrone Drehzahlen aufweisen, dadurch gekennzeichnet, daß das Schaltgetriebe für fünf Vorwärts- und zwei Rückwärtsgänge nur die Verzahnungen eines an sich bekannten dreiwelligen Umlaufgetriebes mit einer Sonnenradwelle (x) einer Hohlradwelle (y) und einer Stegwelle (z) und einem Satz Planetenräder hat, wobei, bei einer Koppelgetriebeauslegung mit der schnellen Koppelwelle (A) als innerer der beiden koaxialen Koppelwellen (A, E), die beiden Koppelwellen (A, E) alternativ oder beide mit der Sonnenradwelle (x) verbindbar sind, wobei die Stegwelle (z) alternativ mit der langsamen Koppelwelle (E) oder mit dem Gehäuse (0) verbindbar ist, wobei die Sonnenradwelle (x) oder die Stegwelle (z) oder beide mit der Hauptabtriebswelle (ab) verbindbar sind und wobei die Hohlradwelle (y) mit dem Gehäuse (0) oder mit der Hauptabtriebswelle verbindbar ist.

2. Lastschaltgetriebe mit den Merkmalen des Oberbegriffs von Anspruch 1, dadurch gekennzeichnet, daß das Schaltgetriebe für fünf Vorwärtsgänge und einen Rückwärtsgang nur die Verzahnungen eines an sich bekannten dreiwelligen Umlaufgetriebes mit einer Sonnenradwelle (x), einer Hohlradwelle (y) und einer Stegwelle (z) und einem Satz Planetenräder hat, wobei, bei einer Koppelgetriebeauslegung mit der langsamen Koppelwelle (E) als innerer der beiden Koppelwellen (A, E), die beiden Koppelwellen (A, E) alternativ oder beide mit der Stegwelle (z) verbindbar sind, wobei die Sonnenradwelle (x) mit der schnellen Koppelwelle (A) verbindbar ist, wobei die Stegwelle (z) mit dem Gehäuse (0) verbindbar ist, wobei die Sonnenradwelle (x) oder die Stegwelle (z) oder beide mit der Hauptabtriebswelle (ab) verbindbar sind und wobei die Hohlradwelle (y) mit dem Gehãuse (0) oder der Hauptabtriebswelle (ab) verbindbar ist.

## Claims

1. Load-switching gear unit, consisting of two part gear units, one part gear unit being a continuously adjustable torque-dividing coupled gear unit, one shaft of which unit is a main drive shaft (an) and which unit has two coaxial coupled shafts (A, E), the transmissions of which can be continuously adjusted in relation to the main drive shaft (an) in such a way that at one adjusting range limit of the continuous adjusting gear unit of the coupled gear unit both coupled shafts (A, E) have the same rotational speeds, whilst when the adjustment transmission of the adjusting gear unit is controlled through to the other adjusting range limit one of the coupled shafts (A) is monotonically faster and the other coupled shaft (E) is monotonically slower, and the other part gear unit being a switching gear unit which is driven alternatively by one of the two coupled shafts (A, E) and which has a main off-drive shaft (ab) which can be connected with the respectively driving coupled shaft by way of various transmissions in such a way that a continuous transmission between the main drive shaft (an) and the main off-drive shaft (ab) can be adjusted within a wide range and that in the case of a gear change the coupling halves which are to be connected have synchronous rotational speeds, characterized in that the switching gear unit has for five forward and two reverse gears only the tooth constructions of a three-shaft planetary gear unit known per se with a sun wheel shaft (x), a hollow wheel shaft (y) and a spider shaft (z) and a set of planet wheels, in which case, with a coupled gear unit layout with the fast coupled shaft (A) as internal shaft of the two coaxial coupled shafts (A, E), the two coupled shafts (A, E) are alternatively connectable or are both connectable with the sun wheel shaft (x), the spider shaft (z) being alternatively connectable with the slow coupled shaft (E) or with the housing (0), the sun wheel shaft (x) or the spider shaft (z) or both being connectable with the main off-drive shaft (ab) and the hollow wheel shaft (y) being connectable with the housing (0) or with the main off-drive shaft.

2. Load-switching gear unit having the features of the preamble of claim 1, characterized in that the switching gear unit has for five forward gears and one reverse gear only the tooth constructions of a three-shaft planetary gear unit known per se with a sun wheel shaft (x), a hollow wheel shaft (y) and a spider shaft (z) and a set of planet wheels, in which case, with a coupled gear unit layout with the slow coupled shaft (E) as internal shaft of the two coupled shafts (A, E), the two coupled shafts (A, E) are alternatively connectable or are both connectable with the spider shaft the sun wheel shaft being connectable with the fast coupled shaft (A), the spider shaft (z) being connectable with the housing (0), the sun wheel shaft (x) or the spider shaft (z) or both being connectable with the main off-drive shaft (ab) and the hollow wheel shaft (y) being connectable with the housing (0) or the main off-drive shaft (ab).

## Revendications

1. Boîte de vitesses, consistant en deux engrenages partiels, l'un des engrenages partiels étant un engrenage d'accouplement réglable en continu, répartissant la puissance, dont un arbre est l'arbre menant principal (an) et qui possède deux arbres accouplés coaxiaux (A, E), dont les transmissions à l'arbre menant principal (an) sont réglables en continu de sorte que les deux arbres accouplés (A, E) présentent les mêmes vitesses au niveau d'une limite du domaine de réglage de l'engrenage de réglage continu de l'engrenage d'accouplement, tandis que lors du réglage de la transmission de réglage de l'engrenage de réglage à l'autre limite du domaine de réglage, l'un des arbres accouplés (A) devient plus rapide de façon monotone et l'autre arbre accouplé (E) devient plus lent de façon monotone, et l'autre engrenage partiel étant un changement de vitesse qui est entraîné alternativement par l'un des deux arbres accouplés (A, E) et qui possède un arbre mené principal (ab) qui peut être lié par l'intermédiaire de différentes transmissions à l'arbre accouplé menant de façon qu'une transmission continue entre l'arbre menant principal (an) et l'arbre mené principal (ab) s'établisse dans un large domaine et que les demi-accouplements à relier présentent des vitesses synchrones lors d'un changement de vitesse, caractérisée en ce que le changement de vitesse pour cinq vitesses avant et deux vitesses arrière ne présente que les dentures d'un engrenage planétaire à trois arbres connu en soi avec un arbre à roue solaire (x) un arbre à roue à denture intérieure (y) et un arbre à nervure (z) et une série de roues planétaires, les deux arbres accouplés (A, E) pouvant être reliés alternativement ou ensemble avec l'arbre à roue solaire (x) dans le cas d'une conception d'engrenage accouplé avec l'arbre accouplé rapide (A) en tant qu'arbre interne des deux arbres accouplés coaxiaux (A, E) l'arbre à nervure (z) pouvant être relié alternativement avec l'arbre accouplé lent (E) ou avec le boîtier (0) l'arbre à roue solaire (x) ou l'arbre à nervure (z) ou les deux pouvant être reliés avec l'arbre mené principal (ab) et l'arbre à roue à denture intérieure (y) pouvant être relié au boîtier (0) ou à l'arbre mené principal.

2. Boîte de vitesses avec les caractéristiques du préambule de la revendication 1, caractérisé en ce que le changement de vitesse pour cinq vitesses avant et une vitesse arrière ne comporte que les dentures d'un engrenage planétaire à trois arbres connu en soi avec un arbre à roue solaire (x) un arbre à roue à denture intérieure (y) et un arbre à nervure (z) et une série de roues planétaires, les deux arbres accouplés (A, E) pouvant être reliés alternativement ou ensemble avec l'arbre à nervure (z) dans le cas d'une conception d'engrenage accouplé avec l'arbre accouplé lent (E) en tant qu'arbre interne des deux arbres accouplés (A, E) l'arbre à roue solaire (x) pouvant être relié à l'arbre accouplé rapide (A), l'arbre à nervure (z) pouvant être relié au boîtier (0), l'arbre à roue solaire (x) ou l'arbre à nervure (z) ou les deux pouvant être reliés à l'arbre mené principal (ab) et l'arbre à roue à denture intérieure (y) pouvant être relié au boîtier (0) ou à l'arbre mené principal (ab).

Fig. 1

Fig. 2

Fig. 3

$i\,ba$

| | $i_{ba}$ | S 1 | S 2 | S 3 | S 4 |
|---|---|---|---|---|---|
| 1. Gang E | −1 | E = x | neutral | z = ab · | y = O |
| | +1 | | | | |
| | +1 | A = E = x | neutral | z = ab | y = O |
| 2. Gang A | | A = x | neutral | z = ab | y = O |
| | −1 | A = x | E = z | z = ab | y = O |
| 3. Gang E | −1 | neutral | E = z | z = ab | y = O |
| | | neutral | E = z | z = ab | neutral |
| | | neutral | E = z | x = z = ab | neutral |
| | | E = x | E = z | x = z = ab | neutral |
| | | E = x | neutral | x = ·z = ab | neutral |
| | +1 | A = E = x | neutral | x = z = ab | neutral |
| | +1 | A = x | neutral | x = z = ab | neutral |
| 4. Gang A | | A = x | neutral | x = ab | neutral |
| | | A = x | neutral | x = ab | y = O |
| | −1 | A = x | E = z | x = ab | y = O |
| 5. Gang E | −1 | neutral | E = z | x = ab | y = O |
| | +1 | | | | |
| 1. R−Gang | −1 | E = x | z = O | neutral | y = ab |
| | +1 | A = E = x | z = O | neutral | y = ab |
| 2. R−Gang | +1 | A = x | z = O | neutral | y = ab |
| | −1 | | | | |

*Fig. 4*

7

Fig. 5

*Fig. 6*

Fig. 7

| | $i_{ba}$ | S 1 | S 2 | S 3 | S 4 |
|---|---|---|---|---|---|
| 1. Gang  E | 1,7 | E = x | neutral | z = ab | y = O |
| | $\frac{1}{1,7}$ | A = E = x | neutral | z = ab | y = O |
| 2. Gang  A | $\frac{1}{1,7}$ | A = x | neutral | z = ab | y = O |
| | 1,7 | A = x | E = z | z = ab | y = O |
| | $\frac{1}{1,7}$ | neutral | E = z | z = ab | y = O |
| 3. Gang  E | | neutral | E = z | z = ab | neutral |
| | | neutral | E = z | x = z = ab | neutral |
| | | E = x | E = z | x = z = ab | neutral |
| | $\frac{1}{1,7}$ | E = x | neutral | x = z = ab | neutral |
| | $\frac{1}{1,7}$ | A = E = x | neutral | x = z = ab | neutral |
| 4. Gang  A | | A = x | neutral | x = z = ab | neutral |
| | | A = x | neutral | x = ab | neutral |
| | 1,7 | A = x | neutral | x = ab | y = O |
| | 1,7 | A = x | E = z | x = ab | y = O |
| 5. Gang  E | | neutral | E = z | x = ab | y = O |
| | $\frac{1}{1,7}$ | | | | |
| 1. R-Gang | 1,7 | E = x | z = O | neutral | y = ab |
| | $\frac{1}{1,7}$ | A = E = x | z = O | neutral | y = ab |
| 2. R-Gang | $\frac{1}{1,7}$ | A = x | z = O | neutral | y = ab |
| | 1,7 | | | | |

Fig. 8

15

Fig. 9

17

|  | S 1 | S 2 | S 3 | S 4 | S 5 |
|---|---|---|---|---|---|
| 1. Gang | neutral | A=x | neutral | z=ab | y=O |
|  | E=z | A=x | neutral | z=ab | y=O |
| 2. Gang | E=z | neutral | neutral | z=ab | y=O |
|  | A=E=z | neutral | neutral | z=ab | y=O |
|  | A=z | neutral | neutral | z=ab | y=O |
|  | A=z | neutral | neutral | z=ab | neutral |
|  | A=z | neutral | neutral | x=z=ab | neutral |
| 3. Gang | A=z | A=x | neutral | x=z=ab | neutral |
|  | neutral | A=x | neutral | x=z=ab | neutral |
|  | neutral | A=x | neutral | x=ab | neutral |
|  | neutral | A=x | neutral | x=ab | y=O |
|  | E=z | A=x | neutral | x=ab | y=O |
| 4. Gang | E=z | neutral | neutral | x=ab | y=O |
|  | A=E=z | neutral | neutral | x=ab | Y=O |
| 5. Gang | A=z | neutral | neutral | x=ab | y=O |
| R.-Gang | neutral | A=x | z=O | neutral | y=ab |

*Fig. 10*

19

Fig. 11

| | S 1 | S 2 | S 3 | S 4 | S 5 |
|---|---|---|---|---|---|
| 1. Gang | E=1 | neutral | r=x | q=0 | y=0 |
| | A=E=1 | neutral | r=x | q=0 | y=0 |
| 2. Gang | A=1 | neutral | r=x | q=0 | y=0 |
| | A=1 | E=r | r=x | q=0 | y=0 |
| | neutral | E=r | r=x | q=0 | y=0 |
| | neutral | E=r | r=x | neutral | y=0 |
| | neutral | E=r | r=1=x | neutral | y=0 |
| 3. Gang | E=1 | E=r | r=1=x | neutral | y=0 |
| | E=1 | E=r | 1=x | neutral | y=0 |
| | E=1 | neutral | 1=x | neutral | y=0 |
| | A=E=1 | neutral | 1=x | neutral | y=0 |
| | A=1 | neutral | 1=x | neutral | y=0 |
| | A=1 | neutral | 1=x | q=0 | y=0 |
| | A=1 | E=r | 1=x | q=0 | y=0 |
| | neutral | E=r | 1=x | q=0 | y=0 |
| 4. Gang | neutral | E=r | 1=x | q=y | y=0 |
| | neutral | E=r | 1=x | q=y | neutral |
| | neutral | E=r | r=1=x | q=y | neutral |
| | neutral | E=r | r=1=x | q=y | y=z |
| | E=1 | E=r | r=1=x | q=y | y=z |
| | E=1 | neutral | r=1=x | q=y | y=z |
| 5. Gang | E=1 | neutral | 1=x | q=y | y=z |
| | E=1 | neutral | 1=x | neutral | y=z |
| | A=E=1 | neutral | 1=x | neutral | y=z |
| | A=1 | neutral | 1=x | neutral | y=z |
| 6. Gang | A=1 | neutral | 1=x | q=0 | y=z |
| | A=1 | E=r | 1=x | q=0 | y=z |
| 7. Gang | neutral | E=r | 1=x | q=0 | y=z |

*Fig. 12*

23